Europäisches Patentamt

European Patent Office

Office européen des brevets

(11) Veröffentlichungsnummer: **0 547 536 A1**

# EUROPÄISCHE PATENTANMELDUNG

(21) Anmeldenummer: **92121222.1**

(22) Anmeldetag: **12.12.92**

(51) Int. Cl.5: **G09B 23/28**, G09B 5/14,
H04N 7/18

(30) Priorität: **19.12.91 DE 4141920**

(43) Veröffentlichungstag der Anmeldung:
**23.06.93 Patentblatt 93/25**

(84) Benannte Vertragsstaaten:
**AT CH DE ES FR GB IT LI SE**

(71) Anmelder: **Zirm, Matthias, Univ.-Prof., Dr.**
**Fallmerayerstrasse 13**
**A-6020 Innsbruck(AT)**

(72) Erfinder: **Zirm, Matthias, Univ.-Prof., Dr.**
**Fallmerayerstrasse 13**
**A-6020 Innsbruck(AT)**

(74) Vertreter: **Riebling, Peter, Dr.-Ing.,**
**Patentanwalt**
**Rennerle 10, Postfach 31 60**
**W-8990 Lindau/B. (DE)**

(54) **Verfahren zum Erlernen von mikrochirurgischen Operationstechniken und Vorrichtung zur Ausübung des Verfahrens.**

(57) Ein Verfahren zum Erlernen von mikrochirurgischen Operationstechniken sieht vor, daß der Lehrer die zu erlernende Operationstechnik an einem Operationsmodell ausübt, wobei das Operationsfeld vom Lehrer durch ein Mikroskop betrachtet und von mindestens einer Video-Kamera aufgenommen wird, deren Signale über einen Monitor oder über einen Video-Projektor an einer Großleinwand dargestellt werden. Zur Unterrichtung mehrerer Schüler ist ein Mehrplatzsystem vorgesehen, wobei auch jedem Schüler ein gleiches Operationsmodell mit einem Mikroskop und mindestens einer Video-Kamera zugeordnet ist und die von der Video-Kamera erzeugten Signale über Leitungen einem Verteiler zugeführt werden, der die Signale jeder Video-Kamera von jedem Schüler auf einem Mehrfeld-Monitor darstellt, der vom Lehrer beobachtet wird und wobei ferner zwischen dem Schüler und dem Lehrer eine Sprachverbindung vorhanden ist.

FIG 1

EP 0 547 536 A1

Die Erfindung betrifft ein Verfahren zum Erlernen von mikrochirurgischen oder endoskopischen oder histologischen Operationstechniken nach dem Oberbegriff des Anspruchs 1 Derartige Operationen werden in der Mikrochirugie, der Orthopädie, Histologie, Pathologie usw. durchgeführt. Die Erfindung bezieht sich demnach auf alle Anwendungsgebiete.

Derartige Operationstechniken sind schwierig zu erlernen, denn durch die begrenzte Größe des Operationsfeldes ist es nur möglich, daß entweder der Lehrer eine Operation ausführt, die dann mit Hilfe von in das Operationsgebiet gerichteten Video-Kameras vergrößert an einem oder mehreren Monitoren dargestellt wird, oder daß der Schüler selbst die Operation durchführt und die von ihm durchgeführte Operation ebenfalls von einem entsprechenden Video-Recorder aufgenommen, von einem Monitor dargestellt wird.

In beiden Fällen fehlt es an einer präzisen Unterweisung des Schülers. Eine derartige präzise Unterweisung hat sich insbesondere bei Augenoperationen als wichtig erwiesen, weil es dort Operationstechniken gibt, wo der Schüler an nicht für ihn sichtbaren Stellen des Auges mit seinen Instrumenten hantieren muß und demzufolge das Operationsergebnis seiner Operation nicht unmittelbar beurteilen kann. Die Schüler werden nach einer bekannten Unterweisungstechnik an ein auf einem Operationstisch befindliches Operationsmodell gesetzt und führen dort an Augenpräparaten die von ihnen zu lernenden Operationstechniken aus. Hierbei ist es bekannt, daß der Lehrer selbst an einem derartigen Operationsmodell sitzt und die von ihm durchgeführte Operation von der Video-Kamera auf einen Video-Projektor übertragen wird, der das Arbeitsergebnis des Lehrers auf einer Großleinwand abbildet.

Nachteil dieser bekannten Unterweisungsmethode ist, daß zwischen dem Lehrer und dem jeweiligen Schüler keine unmittelbare Sprachverbindung besteht, weil der Schüler selbst nur das vom Lehrer erzeugte Operationsergebnis an der Großleinwand betrachten kann und es nur in ungenügender Weise für ihn möglich ist, das von ihm selbst erzeugte Operationsergebnis mit dem des Lehrers vergleichen zu können.

Weiterer Nachteil ist, daß bisher keine unmittelbare Sprechverbindung zwischen dem Lehrer und dem Schüler bestand, so daß der Lehrer gezielt einen Schüler ansprechen kann, um ihn auf evtl. Fehler bei seiner Operationstechnik aufmerksam machen zu können. Ferner war es bisher nicht möglich, das Arbeitsergebnis des Lehrers nicht direkt dem Schüler zugänglich zu machen.

Der vorliegenden Erfindung liegt deshalb die Aufgabe zugrunde, ein Verfahren der eingangs genannten Art so weiterzubilden, daß eine bessere Lernkontrolle bei der Ausübung mikrochirurgischer Operationstechniken gegeben ist.

Zur Lösung der gestellten Aufgabe ist die Erfindung durch die technische Lehre des Anspruchs 1 gekennzeichnet.

Wesentliches Merkmal der Erfindung ist, daß nun jedem Schüler ein gleiches Operationsmodell mit einem Mikroskop und mindestens einer Video-Kamera zugeordnet ist, und daß die von seiner Video-Kamera erzeugten Signale über Leitungen einem Verteiler zugeführt werden, der die Signale jeder Video-Kamera von jedem Schüler auf einem Mehrfeld-Monitor darstellt, der mindestens dem Lehrer zugeordnet ist.

Erfindungsgemäss wird also ein Mehrplatz-System zur Erlernung von mikrofeinen Operationstechniken vorgeschlagen, wobei es nun erstmals für den Lehrer möglich ist, alle von den Schülern durchgeführten Operationen synchron an einem Mehrfeldmonitor zu verfolgen.

Hierbei ist wesentlich, daß ferner zwischen jedem Schüler und dem Lehrer eine isolierte Sprachverbindung vorhanden ist. Eine derartige Sprachverbindung kann z.B. aus einer Kopfhörer-Mikrofon-Kombination bestehen, wobei dem Lehrer ein Verteiler zugeordnet ist, so daß er sich durch Bedienung des Verteilers in Sprechverbindung mit jedem einzelnen Schüler schalten kann. Im folgenden wird die Erfindung anhand eines Beispiels zur Erlernung der mikrochirurgischen Operartionstechnik an Augenpräparaten erleutert. Das Anwendungsgebiet der Erfindung ist hierauf jedoch nicht beschränkt.

Damit ist es nun erstmals möglich, daß der Lehrer gezielt sich in die Operation eines Schülers einschalten kann, weil er dessen Operat ionstechnik auf seinem Mehrfeld-Monitor verfolgen kann, und über die Ansteuerung des Verteilers kann er sich in Sprechverbindung mit diesem Schüler bringen und ihn konkret Schritt für Schritt in die Durchführung der Operationstechnik einweisen. Überdies kann auch jedem Schüler ein Montitor zugeordnet sein, auf dem der Lehrer sein Operationsergebnis dem Schüler zugänglich macht oder auch Operationsergebnisse von anderen Schülern.

Es handelt sich also um ein High Communication Wetlab, das den Vorteil hat, daß die audio-visuelle Verbindung zwischen den einzelnen Schülern und dem Lehrer vorhanden ist. Der Lehrer überträgt seine Operation über einen Monitor, ggf. den Video-Projektor und eine Großleinwand zu den Schülern. Diese sind jedoch akustisch im Sinne eines Sprachlabors mit dem Lehrer in Verbindung. Damit besteht der Vorteil, daß die Schüler den Lehrer in ihren Kopfhörern ohne Nebengeräusche hören, und sie haben auch die Möglichkeit, mit ihm über ihr Mikrofon zu sprechen. Der Lehrer sieht auf seinem Mehrfeld-Monitor sämtliche Augenpräparate der Kursteilnehmer (Schüler) und hat nun die Möglichkeit, durch ein schrittweises Unterrichten jeden einzelnen Schüler visuell zu überwachen. Durch einfaches Drücken einer Taste kann anstelle der einzelnen Felder auf dem Monitur nur das Operationsergebnis des gewünschten Schülers gezeigt werden. In diesem Fall besteht eine isolierte, akustische Verbindung zwischen dem Lehrer und dem Schüler, so daß hierdurch ein intensives und auch durchaus anonymes Unterrichten bzw. Verbessern der Operationstechnik des jeweiligen Schülers durch den Lehrer möglich ist. Damit besteht nämlich auch der Vorteil, daß die anderen Schüler durch die vom Lehrer diesem einzelnen Schüler gegebenen Unterweisungen nicht gestört oder abgelenkt werden.

In einer Weiterbildung des vorliegenden Verfahrens ist es erfindungsgemäss vorgesehen, daß nicht nur eine Video-Kamera den Operationsablauf des jeweiligen Schülers abbildet, sondern daß mehrere Video-Kameras vorhanden sind, welche das Operationsgebiet von verschiedenen Seiten her abbilden. Hierbei ist es vorgesehen, daß bei augenchirurgischen Operationstechniken, wo der Schüler von seiner Sichtseite her nicht den Operationsverlauf unmittelbar verfolgen kann, eine weitere Video-Kamera vorhanden ist, die das vom Schüler nicht direkt einsehbare Operationsgebiet abbildet und dann auf dem vorher erwähnten Lehrfeld-Monitor zur Anzeige bringt. Damit ist es möglich, daß der Lehrer nicht nur die von der Sichtseite des Schülers her ausgeführten Operationstechniken beobachtet, sondern darüber hinaus auch noch unmittelbar in das Operationsgebiet sieht und den Erfolg der vom Schüler ausgeübten Operation überwachen kann.

Selbstverständlich ist es bei allen Ausführungsformen vorgesehen, daß die Signale der verschiedenen Video-Kameras von einem oder mehreren Video-Recordern aufgenommen werden und ebenfalls an dem Mehrfeld-Monitor darstellbar sind.

In einer weiteren Ausgestaltung der Erfindung ist vorgesehen, daß jedem Schüler-Operationsplatz auch ein gesonderter Monitor zur Verfügung steht, wobei bevorzugt auf dem Monitor das Bild der Video-Kamera abgebildet wird, die das Operationsgebiet beobachtet, welches möglicherweise nicht vom Schüler direkt einsehbar ist. Auf diese Weise wird gewährleistet, daß auch der Schüler auf seinem Monitor unmittelbar den Erfolg seiner Operationstechnik überwachen kann. Darüberhinaus kann auf diesem Monitor auch das Arbeitsergebnis des Lehrers oder eines anderen Schülers dargestellt werden.

In einer Weiterbildung der vorliegenden Erfindung ist vorgesehen, daß nicht nur die Signale verschiedener Video-Kameras am jeweiligen Schüler-Operationsplatz zur Anzeige am Lehrer-Arbeitsplatz gebracht werden, sondern daß darüber hinaus auch noch aus dem Operationsgebiet Meßergebnisse abgeleitet werden, die ebenfalls ein Maß für den Operationserfolg darstellen. Beispielsweise können Druckmessungen oder geometrische Vermessungen des Operationsgebietes durchgeführt werden, mit dem Ziel, evtl. schädigende Operationstechniken zu vermeiden. Derartige Meßsignale werden digitalisiert und über einen Multiplexer einem Computer zugeführt, der dann den gesamten Operationsablauf in Form von Meßprotokollen mit verfolgt.

Auf diese Weise können den Video-Bildern des Operationsablaufs die Meßergebnisse, welche aus dem Operationsgebiet abgeleitet werden, gegenübergestellt werden, um somit nicht nur die Operationstechnik optisch zu verfolgen, sondern auch meßtechnisch zu überwachen.

Bei augenchirurgischen Operationstechniken wird die Operationstechnik an einem sogenannten Kunstkopf erprobt, in dessen Augenbereich in der Regel ein Kunstauge oder ein Tierauge eingesetzt ist, an dem die Operationstechnik erprobt wird. Jeder Schüler-Arbeitsplatz weist hier bevorzugt eine erste Video-Kamera auf, die mit einem Mikroskop gekoppelt ist, so daß das vom Schüler beobachtete Operationsgebiet unmittelbar von der Video-Kamera erfasst wird.

In einer Weiterbildung der vorliegenden Erfindung ist vorgesehen, daß eine beträchtliche räumliche Entfernung zwischen dem Lehrer-Operationsplatz und den jeweiligen Schüler-Operationsplätzen besteht. Beispielsweise kann es hierbei vorgesehen sein, daß der Lehrer in den USA sich in einem Labor befindet, in dem er seine Muster-Operation ausführt. Die an seinem Operationsplatz erzeugten Video- und Audiosignale werden über eine drahtlose Nachrichtenübermittlung, z.B. eine Satelliten-übertragung, in ein Labor in Europa übertragen, wo die Schüler-Operationsplätze angeordnet sind.

Die vom Lehrer vorgeführte Master-Operationstechnik wird also über eine drahtlose Nachrichtenverbindung in das Labor mit den Schüler-Operationsplätzen übertragen und kann dort an einem Monitor oder einer Großleinwand dargestellt werden.

Umgekehrt kann auch jedes Audio- und Video-Signal von jedem Schüler-Operationsplatz über eine entsprechende Umschalteinrichtung drahtlos in das Labor des Lehrers, z.B. in den Vereinigten Staaten, übertragen werden. Der Lehrer kann sich somit die Video- und Audio-Signale jedes Schüler-Operationsplatzes in seinem Labor anzeigen lassen und kann unmittelbar (on-line) in die Operationstechnik des Schülers eingreifen.

Nachdem auch jeder Schüler über Audio- und Videoverbindung mit dem Lehrer verbunden ist, kann andererseits auch jeder Schüler eine unmittelbare Hilfe des Lehrers anfordern.

In einer Weiterbildung der Erfindung ist vorgesehen, daß dem Lehrer ein zusätzliches Demonstrationsmittel zur Verfügung steht, nämlich ein Video-Grafikcomputer mit dem er z. B. einen Pfeil, eine Linie, eine Schraffur oder eine andere Markierung an seinem Videomonitor mit Hilfe eines Eingabegerätes erzeugen kann.

Das Operationsbild, welches er aus seinem Operationsfeld ableitet, wird also an einem Videomonitor dargestellt und mit Hilfe des Video-Grafikcomputers kann er an seinem Videomonitor auf dem dort dargestellten Videobild verschiedene Markierungen erzeugen, um eine bestimmte Schnittführung, ein Operationsgebiet oder andere Teile des Bildes grafisch zu markieren. Diese Markierungen werden zusammen mit dem Videobild auf den Monitor des Schülers übertragen und der Schüler kann daraus die Schnittführung erlernen und er bekommt eine bessere Unterrichtung in der Operationstechnik aufgrund der grafischen Hinweise.

In einer anderen Ausgestaltung der Erfindung ist es möglich, daß der Lehrer das Videobild des Schülers mit seinem Grafik-Computer auf dem vom Operationsgebiet des Schülers abgeleiteten Videobild seine Markierungen anbringt, um dem Schüler unmittelbar verbale (über die Sprachverbindung) und optische Hinweise (über den Grafik-Computer) zu geben, um so eine verbesserte Operationstechnik zu lernen. Diese Hinweise werden dann auf dem Schüler-Monitor dargestellt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigt:

Figur 1:    schematisiert ein erstes Ausführungsbeispiel für ein Verfahren zum Erlernen von mikrochirurgischen Operationstechniken in Form eines Mehrplatz-Systems,

Figur 2:    die Anordnung nach Figur 1 mit Darstellung weiterer Einzelheiten,

Figur 3:    schematisiert der Aufbau des Lehrer-Labors,

Figur 4:    schematisiert der Aufbau des Schüler-Labors.

Im gezeigten Ausführungsbeispiel sind schematisiert acht Schüler-Operationsplätze 1 - 8 dargestellt, die beliebig erweiterbar sind, beispielsweise bis zu einer Anzahl von 16 Operationsplätzen.

Jeder Operationsplatz 1 - 8 weist hierbei ein Mikroskop 14 und eine damit gekoppelte Video-Kamera 15 auf. Der Schüler 37 blickt durch das Mikroskop 14 auf das auf einem Operationstisch 9 liegende Operationsmodell 10, welches z.B. als künstliches Gesicht nachgebildet ist, welches in der einen Augenhöhle ein Tierauge oder ein Kunstauge eingesetzt hat.

Die Signale der jeweiligen Video-Kamera 15 werden über Leitungen 16 einem Verteiler 17 zugeführt, dessen Ausgangssignal auf einen Mehrfeld-Monitor 18 geschaltet wird. Auf diese Weise ist es möglich, auf dem Mehrfeld-Monitor 18 nebeneinanderliegend die Video-Bilder aller acht oder sechszehn Operationsarbeitsplätze 1 - 8 darzustellen.

Der Lehrer 36 sitzt ebenfalls an einem Operationstisch, wobei ein gleichartiges Operationsmodell 10 vorhanden ist und verfügt ebenfalls über eine mit einem Mikroskop 14 gekoppelte Video-Kamera 15.

Das Operationsobjekt 11 sei also im beschriebenen Ausführungsbeispiel das Auge.

Wichtig ist, daß jedem Schüler 37 eine Kopfhörer-Mikrofon-Kombination, bestehend aus dem Kopfhörer 12 und dem Mikrofon 13, zugeordnet ist, wobei die Leitungen 20 über einen Verteiler 19 laufen, an dessen Ausgang die Kopfhörer-Mikrofon-Kombination 21,22 des Lehreres 36 angeordnet ist.

Durch Anwahl des Verteilers 19 kann sich somit der Lehrer 36 in Sprechverbindung mit jedem beliebigen Schüler 37 bringen.

Die Eingangssignale am Video-Verteiler 17 werden über eine Leitung 25 einem Video-Recorder 26 eingespeist, dessen Ausgangssignale ebenfalls über die Leitungen 27 auf dem Mehrfeld-Monitor 18 darstellbar sind.

Um das Operationsergebnis des Lehrers allen Schülern zugänglich zu machen, ist es vorgesehen, daß die Video-Kamera des Lehrers 36 über eine Leitung 24 mit dem Mehrfeld-Monitor 18 verbunden ist, so daß an diesem Mehrfeld-Monitor 18 auch das Operationsergebnis des Lehrers dargestellt werden kann. Darüberhinaus ist es möglich, ein oder mehrere Operationsergebnisse entweder eines Schülers oder des Lehrers über die Leitung 28 auf einem Video-Projektor 29 zu führen, der das Videobild auf einer Großleinwand 30 abbildet.

4

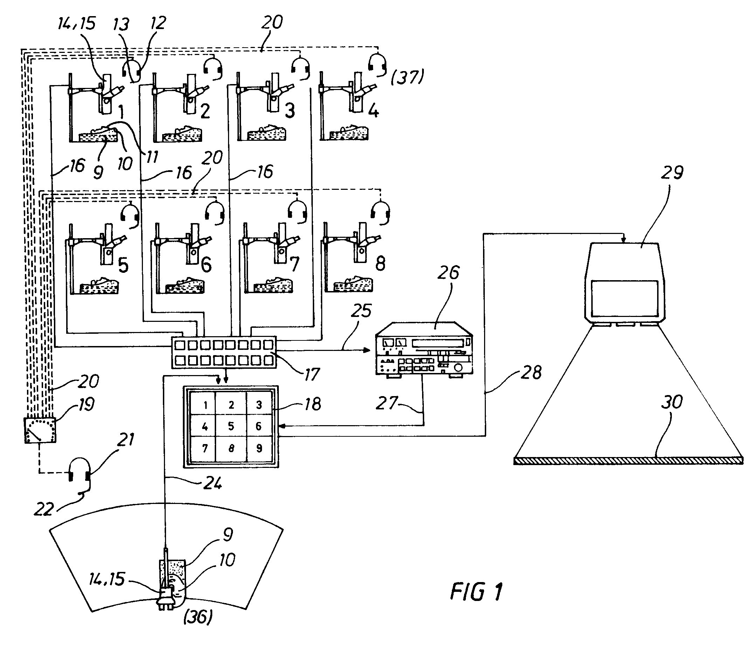

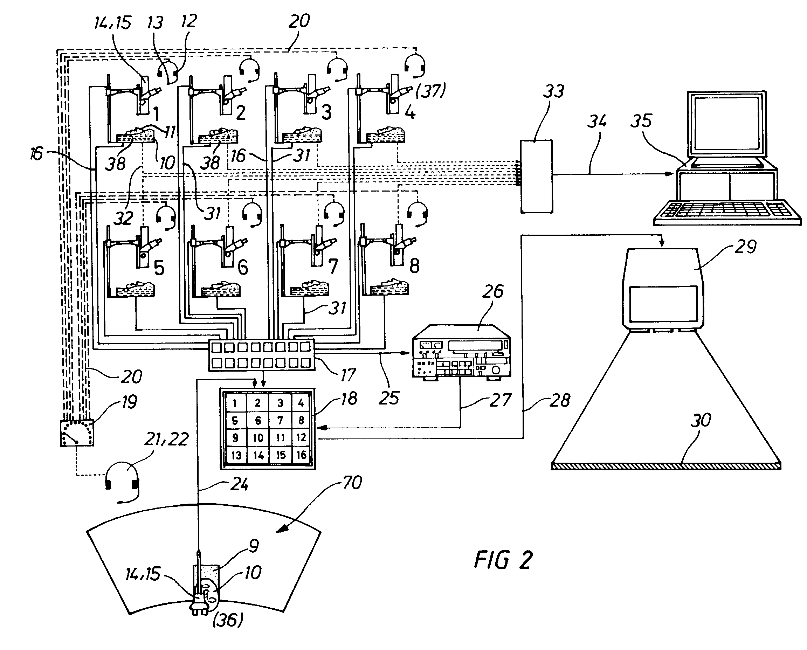

In Figur 2 ist eine weitere Aufbaustufe des Systems nach Figur 1 dargestellt, wobei die gleichen Teile mit gleichen Bezugszeichen versehen sind.

Im Ausführungsbeispiel nach Figur 2 ist dargestellt, daß auch im Operationsmodell 10 eine Video-Kamera 38 eingebaut sein kann, welche das Operationsobjekt 11 von der Unterseite zeigt, d.h. also von der entgegengesetzten Seite, von der der Schüler 37 das Operationsmodell 10 sieht.

Die Signale der Video-Kameras 38 werden über Leitungen 31 ebenfalls dem Verteiler 17 zugeführt und sind ebenfalls auf dem Mehrfeld-Monitor 18 darstellbar.

Darüberhinaus ist es möglich, aus dem Operationsgebiet weitere Meßergebnisse abzuleiten, wie z.B. die Ergebnisse einer Druckmessung aus dem Operationsgebiet, um evtl. Gewebeschädigungen nachweisbar zu machen.

Die Leitungen 32 dieser Meßeinrichtungen münden in einer Meßdatenerfassung 33, die z.B. als digitaler Multiplexer ausgebildet ist und deren Leitung 34 am Ausgang auf einen Computer 35 geschaltet ist, der die Daten in digitaler Form verarbeitet und speichert.

Auf diese Weise kann den Videobildern jeder Operationstechnik unter Zugrundelegung eines synchronen Zeittaktes die entsprechenden Meßergebnisse beim Ablauf der Operation zugeordnet werden.

Insgesamt ergibt sich also mit dem beschriebenen Verfahren der wesentliche Vorteil, daß mikrochirurgische Operationstechniken nun gezielt erlernt werden können, denn der Lehrer 36 kann sich jederzeit durch Betätigung einer Taste des Verteilers 17 und einer Taste des Verteilers 19 sowohl mit dem einzelnen Schüler in Sprechverbindung bringen als auch das Videobild des Operationsfeldes dieses Schülers allein am Mehrfeldmonitor 18 zur Anzeige bringen. Es ist damit erstmals möglich, eine gezielte und störungsfreie Unterweisung von mehreren Schülern gleichzeitig vorzunehmen.

Es versteht sich von selbst, daß die Operationsplätze 1 - 8 räumlich auch in sehr weiter Entfernung von dem Arbeitsplatz des Lehrers und von den beschriebenen Audio-Video-Einrichtungen angeordnet sein können. Beispielsweise ist es möglich, daß die Operationsplätze der Schüler in einem Labor in Europa sich befinden, während der Lehrer mit den zugeordneten audio-visuellen Einrichtungen z.B. in Amerika sitzt. Über entsprechende Satelliten-Verbindungen ist es ohne weiteres möglich, die beschriebene Unterweisung der Schüler in Europa von dem in den USA befindlichen Lehrer aus zu steuern.

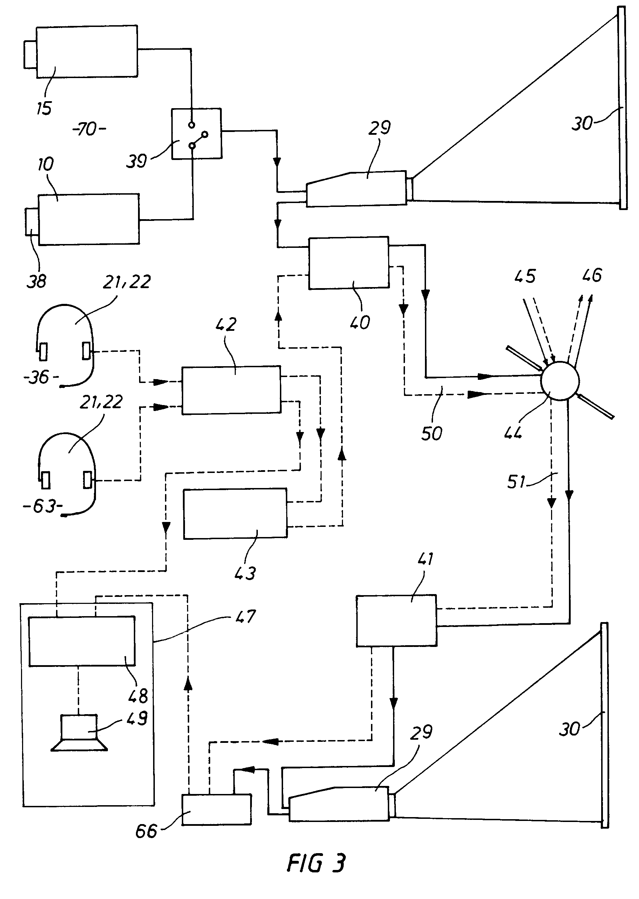

Gemäss Figur 3 weist der Lehrer-Arbeitsplatz 70 ein erstes Mikroskop mit einer daran angeschlossenen Video-Kamera 15 auf, mit dem der Lehrer die von ihm durchgeführte Operationstechnik beobachtet und als Videobild darstellt.

Ggf. steht dem Lehrer 36 noch ein Operationsmodell 10 zur Verfügung, dem eine weitere Video-Kamera 38 zugeordnet ist. Die Art und Ausbildung eines Lehrer-Arbeitsplatzes 70 wurde anhand der Figuren 1 und 2 bereits obenstehend erläutert.

Die beiden Signale der beiden Video-Kameras 15,38 können wahlweise, von einem Umschalter 39 gesteuert, einem Video-Projektor 29 eingespeist werden, der die vom Lehrer durchgeführte Operation unmittelbar im Lehrer-Labor an einer Großleinwand 30 darstellt.

Alternativ oder ergänzend dazu werden die Video-Signale des Lehrer-Arbeitsplatzes 70 über einen Codewandler 40 auf Leitungen 50 geschaltet, wo sie über ein Sendeteil 46 und eine Antenne 44 über möglicherweise große Entfernungen zum Schüler-Labor gesendet werden.

Die Audio-Signale des Lehrers 36 werden über einen Tonmischer 42 einerseits auf einen Tonverstärker 48 geschaltet, der einen Lautsprecher 49 in einem Konferenzraum 47 ansteuert und andererseits werden diese Tonsignale über einen Tonverstärker 43 dem Codewandler 40 eingespeist und ebenfalls über die Leitungen 50 dem Sendeteil 46 zugeführt.

Im Lehrer-Labor kann ein Co-Lehrer vorhanden sein, dem eine eigene Kopfhörer-Mikrofon-Anordnung 21,22 zugeordnet ist, wobei die Audio-Signale des Co-Lehrers 36 im Konferenzraum 47 wiedergegeben werden können oder ebenfalls über die Sendeanlage 46 zum Schüler-Labor übertragen werden.

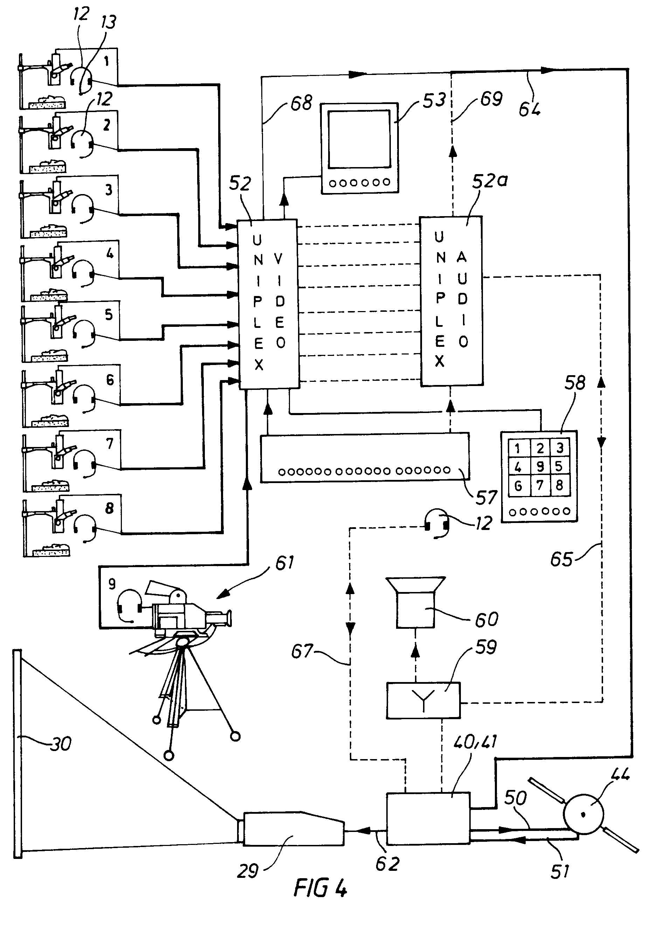

Umgekehrt werden alle Video- und Audio-Signale aus dem Schüler-Labor in das Lehrer-Labor übertragen, wie später noch anhand der Figur 4 näher erläutert wird.

Die im Schüler-Labor erzeugten Video-Signale werden über das Empfangsteil 45 von der Antenne 24 abgenommen und über die Leitungen 51 über den Code-Wandler 41 geführt.

Einem Codewandler kann ein Video-Recorder 66 angeschlossen sein und ein Video-Projektor 29, der das jeweilige, vom Operator ausgewählte Video- und Ton-Signal des Schülerarbeitsplatzes auf der Großleinwand 30 darstellt.

Der Lehrer 36 und der Co-Lehrer 63 können somit beide Großleinwände 30 oder entsprechende Monitore beobachten, um so ständig das Operationsergebnis der Master-Operation mit dem Operationsergebnis eines ausgewählten Schüler-Operationsplatzes 1-8 zu vergleichen.

Nachfolgend wird anhand der Figur 4 das Funktionsschema des Schüler-Labors dargestellt.

Der Aufbau des Schüler-Labors wurde im einzelnen bereits schon anhand der Figuren 1 und 2 erläutert.

Sämtliche Erläuterungen der Figuren 1 und 2 gelten auch für die nachfolgenden Ausführungsbeispiele der Figuren 3 und 3, auch wenn im einzelnen nicht darauf hingewiesen wird. So ist es beispielsweise möglich, die Schüler-Arbeitsplätze gemäss Figur 4 mit weiteren Meßgeräten auszustatten, um das Operationsergebnis besser überwachen zu können.

In Figur 4 sind die Schüler-Operationsplätze mit den Bezugszeichen 1 - 8 versehen.

Die Video-Signale jedes Schüler-Operationsplatzes 1 - 8 werden in eine Video-Umschalteinrichtung 52 eingespeist und die Audio-Signale werden einer Audio-Umschalteinrichtung 52a eingespeist.

Von einem Steuerpult 57 aus kann ein Operator nun die Video- und Audio-Signale jedes beliebigen Schüler-Operationsplatzes auswählten und über die Leitungen 68,69 miteinander verknüpfen und über die Leitung 64 dem Codewandler 40,41 einspeisen. Am Ausgang des Codewandlers 41,42 wird das ausgewählte Video-Audio-Signal über die Leitungen 50 wiederum der Antenne 44 eingespeist und dort ausgesendet.

An der Video-Umschalteinrichtung 52 ist noch ein Kontroll-Monitor 53 für den Operator am Steuerpult 57 angeschlossen, damit das von ihm ausgewählte Bild, welches in das Lehrer-Labor gesendet wird, beobachtet werden kann.

Ebenso beobachtet der Operator einen Kontroll-Monitor 58, der bevorzugt als Split-Monitor ausgebildet ist, um somit jedes am Schüler-Operationsplatz 1 - 8 erzeugte Video-Signal zu kontrollieren.

Die von der Antenne 44 aus dem Lehrer-Labor empfangenen Video- und Audio-Signale werden von der Antenne 44 über die Leitungen 51 in den Codewandler 40,41 eingespeist. Das Audio-Signal geht über die Leitung 67 zu dem Kopfhöhrer-Mikrofon-Fet des Operators am Steuerpult 57. Ebenso wird das Audio-Signal auf eine Weiche 59 geschaltet, wo es über einen Lautsprecher 60 das Schüler-Labor beschallt.

Alternativ dazu kann - hier nicht zeichnerisch dargestellt - das vom Lehrer erzeugte Audio-Signal über das vom Operator bediente Steuerpult 57 gezielt einem ausgewählten Schüler in den Kopfhöhrer 12 eingespeist werden.

Das aus dem Lehrer-Labor empfangene Video-Signal kann über die Leitung 62 im Video-Projektor 29 eingespeist werden und an einer Großleinwand 30 im Schüler-Labor dargestellt werden.

Ebenso können - hier nicht zeichnerisch dargestellt - jedem Schüler-Operationsplatz jeweils ein Monitor zugeordnet werden, so daß jeder Schüler das entsprechende Monitor-Bild der Master-Operation vor sich hat.

Es ist ferner eine Studio-Kamera 61 vorhanden, welche gezielt ausgewählte Plätze des Schüler-Labors darstellen kann. Dieses Signal kann ebenfalls über die Umschalteinrichtungen 52,52a drahtlos in das Lehrer-Labor gesendet werden.

ZEICHNUNGS-LEGENDE

| | |
|---|---|
| 1 Schüler-Operationsplatz | 26 Videorecorder |
| 2 " | 27 Leitung |
| 3 " | 28 Leitung |
| 4 " | 29 Videoprojektor |
| 5 " | 30 Großleinwand |
| 6 " | 31 Leitung |
| 7 " | 32 Leitung |
| 8 " | 33 Meßdatenerfassung |
| 9 Operationstisch | 34 Leitung |
| 10 Operationsmodell | 35 Computer |
| 11 Operationsobjekt | 36 Lehrer |
| 12 Kopfhörer | 37 Schüler |
| 13 Mikrofon | 38 Videokamera |
| 14 Mikroskop | 39 Umschalter |
| 15 Videokamera | 40 Codewandler |
| 16 Leitung | 41 Codewandler |
| 17 Verteiler | 42 Tonmischer |
| 18 Mehrmeldmonitor | 43 Tonverstärker |
| 19 Verteiler | 44 Antenne |
| 20 Leitung | 45 Empfangsteil |
| 21 Kopfhörer | 46 Sendeteil |
| 22 Mikrofon | 47 Konferenzraum |
| 23 | 48 Tonverstärker |
| 24 Leitung | 49 Lautsprecher |
| 25 Leitung | 50 Leitungen |
| | 51 Leitungen |
| | 52 Video-Umschalteinrichtung |
| | 52a Audio-Umschalteinrichtung |
| | 53 Kontrollmonitor |
| | 55 Ton-Umschalteinrichtung |

```
57  Steuerpult
58  Kontrollmonitor
59  Weiche
60  Lautsprecher
61  Studio-Kamera
62  Leitung
63  Co-Lehrer
64  Leitung
65  Leitung
66  Videorecorder
67  Leitung
68  "
69  "
70  Lehrerarbeitsplatz
```

**Patentansprüche**

1. Verfahren zum Erlernen von mikrochirurgischen Operationstechniken, bei dem der Lehrer die zu erlernende Operationstechnik an einem Operationsmodell ausübt, wobei das Operationsfeld vom Lehrer durch ein Mikroskop betrachtet und von mindestens einer Videokamera aufgenommen wird, deren Signale über einen Videomonitor oder über einen Videoprojektor darstellt werden, **dadurch gekennzeichnet,** daß auch jedem Schüler ein gleiches Operationsmodell (10) mit einem Mikroskop (14) und mindestens einer Videokamera (15) zugeordnet ist; daß die von seiner Videokamera (15) erzeugten Signale über Leitungen (10) einem Verteiler (17) zugeführt werden, der die Signale jeder Videokamera (15) von jedem Schüler auf einem Mehrfeldmonitor (18) darstellt, der vom Lehrer (36) beoabachtet wird und daß ferner zwischen jedem Schüler (37) und dem Lehrer (36) eine Sprachverbindung (12,13,19,20,21,22) vorhanden ist.

2. Verfahren nach Anspruch 1, **dadurch gekennzeichnet,** daß die von den einzelnen Videokameras (15) der Schüler (37) aufgenommenen Videobilder von einem Videorecorder (26) aufgenommen werden, der mit dem Mehrfeldmonitor (18) verbunden ist.

3. Verfahren nach Anspruch 1 oder 2, **dadurch gekennzeichnet,** daß der Mehrfeldmonitor (18) auf die Wiedergabe eines einzelnen Operationsablaufs eines einzelnen Schüler-Operationsplatzes (1-8) umschaltbar ist.

4. Verfahren nach Anspruch 1 oder 2, **dadurch gekennzeichnet,** daß der Mehrfeldmonitor (18) synchron alle Videobilder von allen Schüler-Operationsplätzen (1-8) darstellt.

5. Verfahren nach einem der Ansprüche 1 - 4, **dadurch gekennzeichnet,** daß dem Schüler-Operationsplatz (1-8) mindestens eine weitere Videokamera (38) zugeordnet ist, welche das Operationsgebiet von einer vom Schüler (37) nicht sichtbaren, anderen Perspektive zeigt und daß auch die Signale dieser Videokameras (38) auf dem Mehrfeldmonitor (18) wahlweise einzeln oder zusammen darstellbar sind.

6. Verfahren nach einem der Ansprüche 1 - 5, **dadurch gekennzeichnet,** daß aus dem Operationsgebiet des Schülers (37) weitere Meßsignale abgeleitet werden, die in digitaler Form von einem Computer (35) gespeichert werden.

7. Vorrichtung zur Ausübung des Verfahrens nach einem der Ansprüche 1 - 6, **dadurch gekennzeichnet,** daß jedem Operationsplatz (1-8) mindestens eine Videokamera (15) zugeordnet ist, daß die Signale aller Videokameras über einem Verteiler (17) einem Mehrfeldmonitor (18) zugeleitet werden, der wahlweise die Bilder aller Videokameras (15) zusammen oder einzeln darstellt.

8. Vorrichtung nach Anspruch 7, **dadurch gekennzeichnet,** daß die Sprachverbindung (12,13,19-22) zwischen Lehrer (36) und Schüler (37) aus jeweils einem Kopfhörer (12,21) mit einem daran befestigten Mikrofon (13,22) besteht.

9. Vorrichtung nach Anspruch 7 oder 8, **dadurch gekennzeichnet,** daß im Operationsmodell (10) eine weitere Videokamera (38) eingebaut ist, deren Signale ebenfalls über dem Verteiler (17) geführt auf einem Mehrfeldmonitor (18) darstellbar sind.

10. Verfahren zum Erlernen von mikrochirurgischen Operationstechniken, bei dem der Lehrer die zu erlernende Operationstechnik an einem Operationsmodell ausübt, wobei das Operationsfeld vom Lehrer durch ein Mikroskop betrachtet und von mindestens einer Videokamera aufgenommen wird, deren Signale über einen Videomonitor oder über einen Videoprojektor darstellt werden, **dadurch gekennzeichnet,** daß zwischen dem Lehrer-Operationsplatz (70) und den Schüler-Operationsplätzen (1-8) eine große räumliche Entfernung besteht und daß zwischen dem Lehrer (36) und den Schülern eine Video- und Audio-Verbindung über eine drahtlose oder drahtgebundene Nachrichtenübertragung besteht.

11. Vorrichtung zur Ausübung des Verfahrens nach Anspruch 10, **dadurch gekennzeichnet,** daß die von jedem Schüler-Operationsplatz (1-8) erzeugten Videobilder über eine Video- und Audio-Umschalteinrichtung (52,52a) auf einem Codewandler (40,41) schaltbar sind, der das Signal drahtlos zum Lehrer-Operationsplatz (70) überträgt, wo wahlweise das Bild und der Ton von jedem Schüler-Operationsplatz (1-8) darstellbar sind.

12. Vorrichtung nach Anspruch 11, **dadurch gekennzeichnet,** daß die am Lehrer-Operationsplatz (70) erzeugten Videobilder über einen Codewandler (40) drahtlos zu den Schüler-Operationsplätzen (1-8) übertragen werden.

13. Vorrichtung nach einem der Ansprüche 7 bis 9 oder 11 bis 12, **dadurch gekennzeichnet,** daß dem Lehrer ein Video-Grafikcomputer zuzätzlich zugeordnet ist, mit dem er mittels eines Eingabegerätes eine grafische Markierung (z. B. Pfeil, Linie, Schraffur) auf seinem Videomonitor erzeugt, welche Markierung an dem Videomonitor eines oder mehrerer Schüler angezeigt wird.

FIG 1

FIG 2

EP 0 547 536 A1

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 731 323 (MATHIAS ZIRM) <br> * gesamtes Dokument * <br> --- | 1-4,7,8 ,10-12 | G 09 B 23/28 <br> G 09 B 5/14 <br> H 04 N 7/18 |
| Y | EP-A-0 396 488 (PALACIO LOPEZ, DOMINGO ET AL.) <br> * Zusammenfassung; Seite 2, Zeile 58 Seite 4, Zeile 7; Figuren 1, 2 * <br> --- | 1-4,7,8 ,10-12 | |
| A | US-A-4 598 311 (JOSEPH H. BELLINA) <br> * Zusammenfassung; Spalte 2, Zeile 22 Spalte 3, Zeile 15; Spalte 4, Zeile 18 Spalte 5, Zeile 41; Figuren 1 - 4 * <br> --- | 1,7,10 | |
| A | US-A-4 715 818 (RONALD L. SHAPIRO ET AL.) <br> * Zusammenfassung; Spalte 1, Zeile 52 Spalte 2, Zeile 18; Spalte 2, Zeile 31 Spalte 3, Zeile 11; Figur 1 * <br> --- | 7,11 | |
| A | EP-A-0 279 558 (ING. C. OLIVETTI & C., S.P.A.) <br> * Zusammenfassung ; Spalte 7, Zeilen Spalte 8, Zeile 4; Figur 1 * <br> ----- | 7,11 | **RECHERCHIERTE SACHGEBIETE (Int. Cl.5)** <br> G 09 B <br> H 04 N <br> A 61 B |

Der vorliegende Recherchenbericht wurde für alle Patentansprüche erstellt

| Recherchenort | Abschlußdatum der Recherche | Prüfer |
|---|---|---|
| BERLIN | 16-03-1993 | BEITNER M J J |